# EUROPÄISCHE PATENTSCHRIFT

(11) **EP 0 632 195 B1**
(45) Veröffentlichungstag und Bekanntmachung des Hinweises auf die Patenterteilung: **25.09.1996**
(21) Anmeldenummer: 94107195.3
(22) Anmeldetag: 07.05.1994
(51) Int. Cl.: F02F 11/00, F02B 77/13

(54) **Abdichtung zweier Gehäuseteile**
Sealing of 2 carter parts
Etanchéité entre 2 éléments de carter

(30) Priorität: 29.06.1993 DE 4321514
(43) Veröffentlichungstag der Anmeldung: 04.01.1995
(73) Patentinhaber: CR Elastomere GmbH, D-51379 Leverkusen-Opladen (DE)
(72) Erfinder: Stephan, Bernd -Dipl.-Ing., D-42897 Remscheid-Lennep (DE)

(56) Entgegenhaltungen:
- EP-A- 0 272 642
- EP-A- 0 602 398
- FR-A- 2 359 326
- US-A- 4 074 491

## Beschreibung

Die Erfindung betrifft eine Abdichtung zwischen einer Ölwanne und eines Kurbelwellengehäuses bei Brennkraftmaschinen, mittels einer Elastomerdichtung, die über Befestigungsschrauben zwischen den zwei Gehäuseteilen verspannbar ist, wobei die Befestigungsschrauben durch elastische Elemente gegenüber der Ölwanne körperschallisoliert in Durchgangsbohrungen der Ölwanne angeordnet sind.

Bei Brennkraftmaschinen entstehen aufgrund der Arbeitsweise Geräusche, die durch die nicht kraftführende Ölwanne verstärkt werden. Um die Geräuschabstrahlung zu verringern, werden diese Gehäuseteile über körperschallisolierende Elemente mit der Brennkraftmaschine verbunden, so daß man von einer entkoppelten Verbindung spricht.

Die DE-OS 27 23 459 offenbart eine Brennkraftmaschine mit am Kurbelwellengehäuse körperschallisolierend angeschlossener Ölwanne. Die Ölwanne ist durch eine Elastomerdichtung, die am Ölwannenrand aufvulkanisiert oder aufgeklebt ist, gegenüber dem Motorblock isoliert. Gegenüber den Befestigungsschrauben erfolgt die Isolierung der Ölwanne über elastische Elemente aus Kautschuk, die jeweils einzeln zusammen mit den Schrauben in die Durchgangsbohrungen eingelegt werden.

Der Erfindung liegt die Aufgabe zugrunde, eine gattungsgemäße Vorrichtung im Hinblick auf die Montagekosten zu verbessern.

Diese Aufgabe wird erfindungsgemäß dadurch gelöst, daß die elastischen Elemente am Außenumfang der Elastomerdichtung sich erstrecken und durch Umklappen in die Durchgangsbohrungen steckbar sind.

Die nicht vorveröffentlichte Schrift EP-A-602 398 zeigt eine ähnliche Abdichtung zwischen Ventilhaube und Zylinderkopf.

Auf diese Weise wird eine Abdichtung geschaffen, die sämtliche Elemente zur Körperschallisolierung aufweist. Beim Einbau der Elastomerdichtung werden die elastischen Elemente zur Isolierung der Schrauben in die Durchgangsbohrungen geklappt. Sollte beim Einbau ein elastisches Element nicht umgeklappt sein, so wird bei der Qualitätskontrolle dieser Mißstand sofort aufgedeckt, da das am Außenumfang der Elastomerdichtung angeordnete Element nicht erkennbar ist. Darüber hinaus wird die Montage erleichtert, da die Elemente nicht separat bereitgestellt werden müssen, hinzu kommt, daß eine Verwechselung von elastischen Elementen ausgeschlossen ist. Es werden immer die richtigen, in Bezug auf Flächenpressung und Elastizität der Elastomerdichtung abgestimmten Elemente eingebaut.

Eine Herstellungskostenreduzierung ergibt sich überdies durch die einstückige Verbindung zwischen Elastomerdichtung und elastischen Elementen, da Dichtung und elastische Elemente in der gleichen Form, das heißt gleichzeitig gefertigt werden.

Durch die erfindungsgemäße Abdichtung besteht weiterhin die Möglichkeit, die elastischen Elemente, über den Umfang der Elastomerdichtung gesehen, mit unterschiedlichen axialen Höhen auszubilden. Diese Maßnahme nimmt Einfluß auf die Elastizität mit der Folge, daß die Schrauben nicht mehr, wie bisher in gleichen Abständen über die Ölwanne verteilt, angeordnet werden müssen, sondern sie können unterschiedliche Abstände voneinander aufweisen. Auf diese Weise kann bei gleichem Anzugsmoment für jede Befestigungsschraube eine individuelle Anpreßkraft eingestellt werden, um so, auch bei großem Schraubenabstand, eine ausreichende Flächenpressung auf die Elastomerdichtung zu erzeugen.

Ein weiterer Vorteil der erfindungsgemäßen Abdichtung ergibt sich durch die Anwendung von Abstandshülsen in den Bohrungen der elastischen Elemente. Die Abstandshülsen verhindern, daß beim Anziehen der Befestigungsschrauben die Elastomerdichtung beschädigt wird. Überdies ist am Endbereich der Abstandshülsen eine Halteeinrichtung in Form eines radial vorspringenden Kragens oder in Form einer Hinterschneidung angeordnet. Beim Eindrücken der elastischen Elemente in die Durchgangsbohrungen greifen die Abstandshülsen mit der Halteeinrichtung hinter die Elastomerdichtung, so daß bereits ohne die Befestigungsschrauben die Dichtung unverlierbar mit der Ölwanne verbunden ist.

Die Erfindung ist in der Zeichnung anhand eines Ausführungsbeispieles dargestellt und wird im folgenden näher erläutert. Es zeigen:
Figur 1 Ausschnitt einer erfindungsgemäßen Abdichtung im Querschnitt
Figur 2 einen Ausschnitt gemäß Figur 1 im nicht eingebauten Zustand

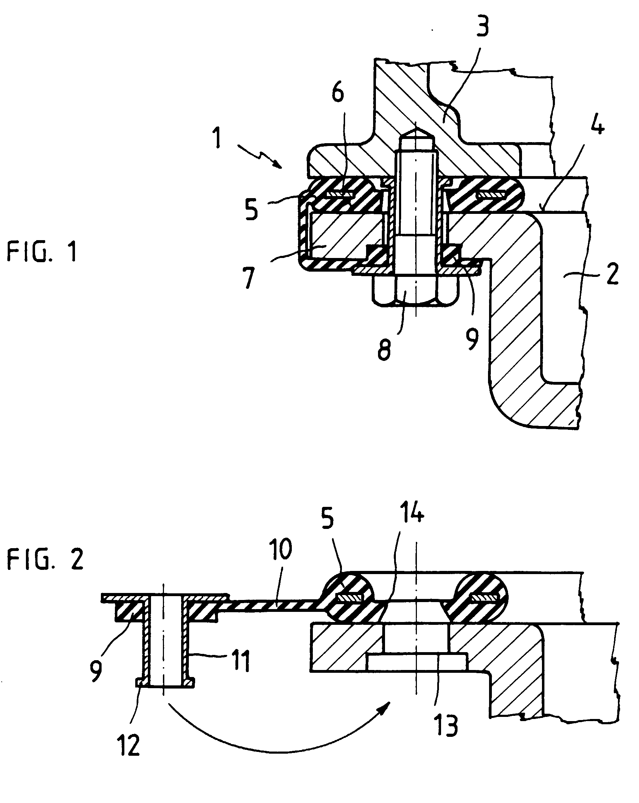

Die Figur 1 zeigt eine Abdichtung (1) einer Ölwanne für Brennkraftmaschinen. Die Ölwanne (2) besteht aus Aluminium und wurde im Druckgußverfahren hergestellt. Zur Abdichtung gegenüber dem Kurbelwellengehäuse (3) ist auf der Ölwannenflanschfläche (4) eine Elastomerdichtung (5) angeordnet. Die Dichtung (5) kann mit einer bandförmigen Einlage (6) verstärkt sein. Um die Dichtung (5) in definierter Vorspannung auf die Dichtfläche (4) pressen zu können, sind am Ölwannenrand (7) mehrere, über den Umfang verteilt, Schrauben (8) angeordnet, die in das Gehäuse (3) einschraubbar sind.

Die Figur 2 zeigt die Elastomerdichtung (5) vor dem Einbau an das Kurbelwellengehäuse (3) (Figur 1). In dieser Lage sind die elastischen Elemente (9) am Außenumfang der Dichtung (5) angeordnet. Die Verbindung zur Dichtung (5) erfolgt über eine dünne Gummischicht (10), die als Scharnier wirkt. In den elastischen Elementen (9) können Abstandshülsen (11) angeordnet sein, welche als Verpressungsbegrenzer beim Festziehen der Schrauben (8) fungieren. Die Abstandshülse (11) weist am Endbereich eine Halteeinrichtung (12) in Form eines radial vorspringenden Kragens (12) auf. Der Kragen (12) greift beim Einklappen der Elemente (9) in die Durchgangsbohrung (13) hinter die Elastomerdichtung (5), die zum Zwecke der Arretierung eine entsprechende Nase (14) aufweist. Nach dem Umklappen ist die Dichtung (5) mit der Ölwanne (2) verbunden, so daß man eventuell auf ein Anvulkanisieren oder Ankleben der Dichtung (5) verzichten kann.

Schließlich braucht nur noch die Schraube (8) durch das Element (9) gesteckt zu werden, um so die Ölwanne (2) an das Gehäuse (3) festzuschrauben. Auf diese Weise wird eine voll entkoppelte Abdichtung zwischen den zwei Gehäuseteilen erzeugt.

## Patentansprüche

1. Abdichtung aneinander grenzender Dichtflächen einer Ölwanne und eines Kurbelwellengehäuses bei Brennkraftmaschinen, mittels einer Elastomerdichtung, die über Befestigungselemente zwischen den Gehäuseteilen verspannbar ist, wobei die Befestigungsschrauben durch elastische Elemente gegenüber der Ölwanne körperschallisoliert in Durchgangsbohrungen der Ölwanne angeordnet sind, dadurch gekennzeichnet, daß die elastischen Elemente (9) am Außenumfang der Elastomerdichtung (5) sich erstrecken und durch Umklappen auf beziehungsweise in die Durchgangsbohrungen (11) bringbar sind.

2. Abdichtung nach Anspruch 1, dadurch gekennzeichnet, daß die elastischen Elemente (9) einstückig mit der Elastomerdichtung (5) verbunden sind.

3. Abdichtung nach den Ansprüchen 1 und 2, dadurch gekennzeichnet, daß, über den Umfang der Elastomerdichtung (5) verteilt, elastische Elemente (9) mit unterschiedlicher axialer Höhe angeordnet sind.

4. Abdichtung nach den Ansprüchen 1 bis 3, dadurch gekennzeichnet, daß in den Bohrungen der elastischen Elemente (9) Abstandshülsen (11) angeordnet sind.

5. Vorrichtung nach den Ansprüchen 1 bis 4, dadurch gekennzeichnet, daß die Abstandshülsen (11) am Endbereich eine Halteeinrichtung (12) aufweisen.

6. Vorrichtung nach den Ansprüchen 1 bis 5, dadurch gekennzeichnet, daß die Halteeinrichtung (12) als radial vorspringender Kragen ausgebildet ist.

7. Vorrichtung nach den Ansprüchen 1 bis 5, dadurch gekennzeichnet, daß die Halteeinrichtung (12) als Hinterschneidung ausgebildet ist.

8. Vorrichtung nach den Ansprüchen 1 bis 7, dadurch gekennzeichnet, daß die Abstandshülse (11) aus Metall besteht.

## Claims

1. Sealing arrangement of adjoining sealing surfaces of an oil tank and a crankshaft casing in internal combustion engines using an elastomer seal, which may be clamped between the two housing parts via fastening screws, said fastening screws being arranged in continuous holes in the oil tank by elastic elements so as to be insulated against solid-borne noise from the oil tank, characterised in that the elastic elements (9) extend on the outer periphery of the elastomer seal (5) and may be attached onto or inserted into the continuous holes (11) by folding them over.

2. Sealing arrangement according to Claim 1, characterised in that the elastic elements (9) are connected in one piece to the elastomer seal (5).

3. Sealing arrangement according to Claims 1 and 2, characterised in that elastic elements (9) distributed over the periphery of the elastomer seal (5) are arranged with different axial height.

4. Sealing arrangement according to Claims 1 to 3, characterised in that spacer sleeves (11) are arranged in the holes of the elastic elements (9).

5. Device according to Claims 1 to 4, characterised in that the spacer sleeves (11) have a retaining means (12) in the end region.

6. Device according to Claims 1 to 5, characterised in that the retaining means (12) is constructed as a radially projecting collar.

7. Device according to Claims 1 to 5, characterised in that the retaining means (12) is constructed as an undercut.

8. Device according to Claims 1 to 7, characterised in that the spacer sleeve (11) is made of metal.

## Revendications

1. Dispositif d'étanchéité de surfaces d'étanchéité contigues d'un carter d'huile et d'une boite de vilebrequin dans de moteurs à combustion interne, compartant une garniture d'étanchéité en élastomère, qui est déformable entre les éléments de boîtier par des éléments de fixation, les vis de fixation étant disposées dans des alésages de passage du carter d'huile de manière isolante acoustiquement par rapport au carter d'huile par des éléments élastiques, caractérisée en ce que les éléments élastiques (9) s'étendent à la périphérie extérieure de la garniture d'étanchéité en élastomère (5) et peuvent étre amenées rabattement sur, respectivement dans les alésages de passage (11).

2. Dispositif d'étanchéité selon la revendication 1, caractérisée en ce que les éléments élastiques (9) sont reliés de manière monobloc à la garniture d'étanchéité en élastomère (5).

3. Dispositif d'étanchéité selon les revendications 1 et 2, caractérisée en ce que des éléments élastiques (9) de hauteur axiale différente sont réparties sur la périphérie de la garniture d'étanchéité en élastomère (5).

4. Despositif d'étanchéité selon les revendications 1 à 3, caractérisée en ce que des douilles d'écartement (11) sont disposées dans les alésages des éléments élastiques (9).

5. Dispositif selon les revendications 1 à 4, caractérisé en ce que les douilles d'écartement (11) présentent un arrangement de retenue (12) dans la zone d'extrémité.

6. Dispositif selon les revendications 1 à 5, caractérisé en ce que l'arrangement de retenue (12) est réalisé sous la forme d'une collerette saillante radialement.

7. Dispositif selon les revendications 1 à 5, caractérisé en ce que l'arrangement de retenue (12) est réalisé sous la forme d'une contre-dépouille.

8. Dispositif selon les revendications 1 à 7, caractérisé en ce que la douille d'écartement (11) est réalisée en métal.
